# EUROPEAN PATENT APPLICATION

(11) **EP 2 199 180 A1**
(43) Date of publication of application: **23.06.2010**
(21) Application number: 08360041.1
(22) Date of filing: 10.12.2008
(51) Int. Cl.: B62B 7/04

(54) **Assembly-type toy stroller**

(71) Applicant: Huang, Ming-Tai, Taipei (TW)
(72) Inventor: Huang, Ming-Tai, Taipei (TW)
(74) Representative: Metz, Paul

(57) **Abstract**

A toy stroller includes two cross-hinged bottom tubes (10), two cross-hinged rear tubes (12), two front legs (16), and two handle tubes (14). An end (100) of each bottom tube (10) is detachably coupled to one of two connecting members (30) fixed to an end (122) of one of the rear tubes (12). The other end (102) of each bottom tube (10) is detachably coupled to one of two coupling members (32) fixed to one of the front legs (16). An upper section (160) of each front leg (16) is detachably coupled to one of two sleeves (18) fixed to a lower end (142) of one of the handle tubes (14). The other end (120) of each rear tube (10) is detachably coupled to one of two engaging members (34) fixed to an upper end (140) of one of the handle tubes (14).

## Description

### BACKGROUND OF THE INVENTION

The present invention relates to a stroller and, more particularly, to an assembly-type toy stroller that can be easily and quickly assembled and dismantled.

Toy strollers generally include two handles, a frame, and a plurality of wheels. The frame is generally foldable to allow easy carriage and storage. Furthermore, the frame generally includes movable and lockable joints so that the toy stroller can be retained in a folded state or an extended state. However, the frame may fold due to accidental impact to the joints, such that a child playing the toy stroller may be injured due to falling or being impinged by the frame. U.S. Patent No. 5,845,925 discloses a safety device mounted to the rear tubes of the stroller to avoid unintentional folding. However, the stroller has many parts and, thus, has high costs in manufacturing and assembly. Furthermore, a large number of rivets are utilized to pivotably connect the parts, which not only weaken the structural strength of the parts in the pivotal connections but complicate the processing procedures.

Thus, a need exists for a toy stroller that has fewer parts without sacrificing the structural strength while having a smaller volume for transport.

### BRIEF SUMMARY OF THE INVENTION

The present invention solves this need and other problems in the field of toy strollers by providing, in a preferred form, a toy stroller including first and second bottom tubes each including first and second ends and an intermediate portion between the first and second ends. The bottom tubes are cross hinged at the intermediate portions thereof. The toy stroller further includes first and second rear tubes each including first and second ends and an intermediate portion between the first and second ends. The rear tubes are cross hinged at the intermediate portions thereof. A rear wheel unit is coupled to the lower end of each rear tube. The toy stroller further includes first and second connecting members each including a first tube, a second tube extending outward from an outer periphery of the first tube, and a third tube extending outward from an outer periphery of the second tube. The first tube of the first connecting member is fixed to the second end of the first rear tube. The first tube of the second connecting member is fixed to the second end of the second rear tube. The first end of the first bottom tube is detachably mounted in the second tube of the second connecting member. The first end of the second bottom tube is detachably coupled with the second tube of the first connecting member. The toy stroller further includes first and second handle tubes each including upper end lower ends. A handle is fixed to each handle tube. The toy stroller further includes first and second engaging members each including a first tube and a second tube extending from an outer periphery of the first tube. The first tube of the first engaging member is fixed to the upper end of the first handle tube. The first tube of the second engaging member is fixed to the upper end of the second handle tube. The first end of the first rear tube is detachably coupled with the second tube of the second engaging member. The first end of the second rear tube is detachably coupled with the second tube of the first engaging member. The toy stroller further includes first and second sleeves each including first and second receptacles. The lower end of the first handle tube is fixed in the first receptacle of the first sleeve. The lower end of the second handle tube is fixed in the first receptacle of the second sleeve. The toy stroller further includes first and second front legs each including an upper section, a lower section, and an intermediate section between the upper and lower sections. A front wheel unit is coupled to the lower section of each front leg. The upper section of the first front leg is detachably mounted in the second receptacle of the first sleeve. The upper section of the second front leg is detachably mounted in the second receptacle of the second sleeve. The toy stroller further includes first and second coupling members each including a first tube and a second tube extending outward from an outer periphery of the first tube. The first tube of the first coupling member is fixed around the intermediate section of the first front leg. The first tube of the second coupling member is fixed around the intermediate section of the second front leg. The second end of the first bottom tube is detachably coupled with the second tube of the first coupling member. The second end of the second bottom tube is detachably coupled with the second tube of the second coupling member. A left end of a fixing tube is detachably coupled with the third tube of the second connecting member. A right end of the fixing tube is detachably coupled with the third tube of the first connecting member.

The present invention will become clearer in light of the following detailed description of an illustrative embodiment of this invention described in connection with the drawings.

### DESCRIPTION OF THE DRAWINGS

The illustrative embodiment may best be described by reference to the accompanying drawings where:
FIG. 1 shows an exploded, perspective view of an assembly-type toy stroller according to the preferred teachings of the present invention.
FIG 2 shows a perspective view of the toy stroller of FIG 1 with the toy stroller in an assembled and extended state.
FIG. 2A shows an enlarged view of a circled portion of the toy stroller of FIG. 2.
FIG. 3 shows another perspective view of the toy stroller of FIG. 2.
FIG 3A shows an enlarged view of a circled portion of the toy stroller of FIG. 3.

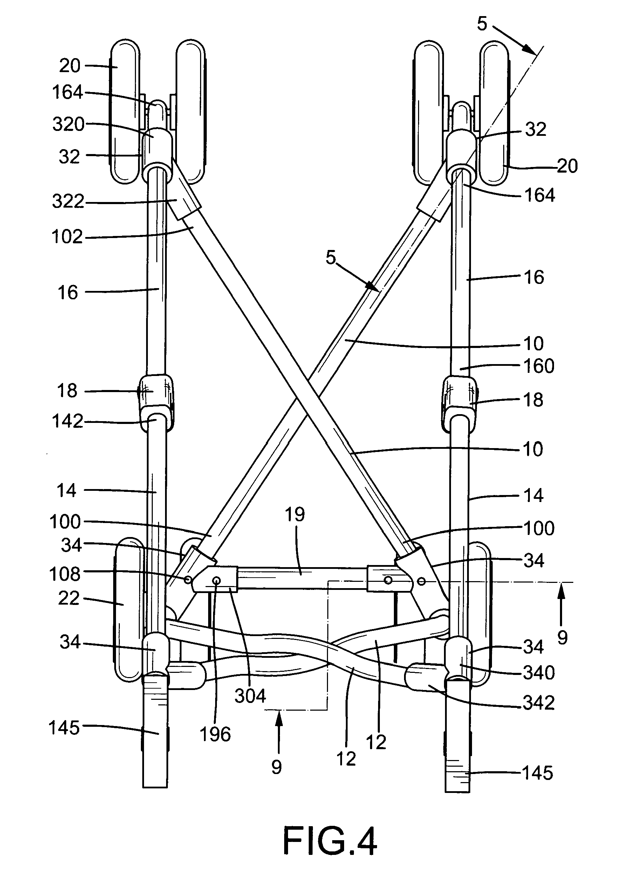

FIG. 4 shows a rear view of the toy stroller of FIG. 1.
FIG. 5 shows a partial, cross sectional view of the toy stroller of FIG. 1 according to section line 5-5 of FIG. 4.
FIG. 6 shows a partial, cross sectional view of the toy stroller of FIG. 1 according to section line 6-6 of FIG. 2.
FIG. 7 shows a partial, cross sectional view of the toy stroller of FIG. 1 according to section line 7-7 of FIG. 6.
FIG. 8 shows a partial, cross sectional view of the toy stroller of FIG. 1 according to section line 8-8 of FIG. 3.
FIG. 9 shows a partial, cross sectional view of the toy stroller of FIG. 1 according to section line 9-9 of FIG. 4.
FIG. 10 shows a perspective view of the toy stroller of FIG. 1 with the toy stroller completely detached.

All figures are drawn for ease of explanation of the basic teachings of the present invention only; the extensions of the figures with respect to number, position, relationship, and dimensions of the parts to form the preferred embodiment will be explained or will be within the skill of the art after the following teachings of the present invention have been read and understood. Further, the exact dimensions and dimensional proportions to conform to specific force, weight, strength, and similar requirements will likewise be within the skill of the art after the following teachings of the present invention have been read and understood.

Where used in the various figures of the drawings, the same numerals designate the same or similar parts. Furthermore, when the terms "first", "second", "third", "fourth", "fifth", "lower", "upper", "inner", "outer", "left", "right", "side", "end", "portion", "section", "longitudinal", "radial", "lateral", and similar terms are used herein, it should be understood that these terms have reference only to the structure shown in the drawings as it would appear to a person viewing the drawings and are utilized only to facilitate describing the invention.

### DETAILED DESCRIPTION OF THE INVENTION

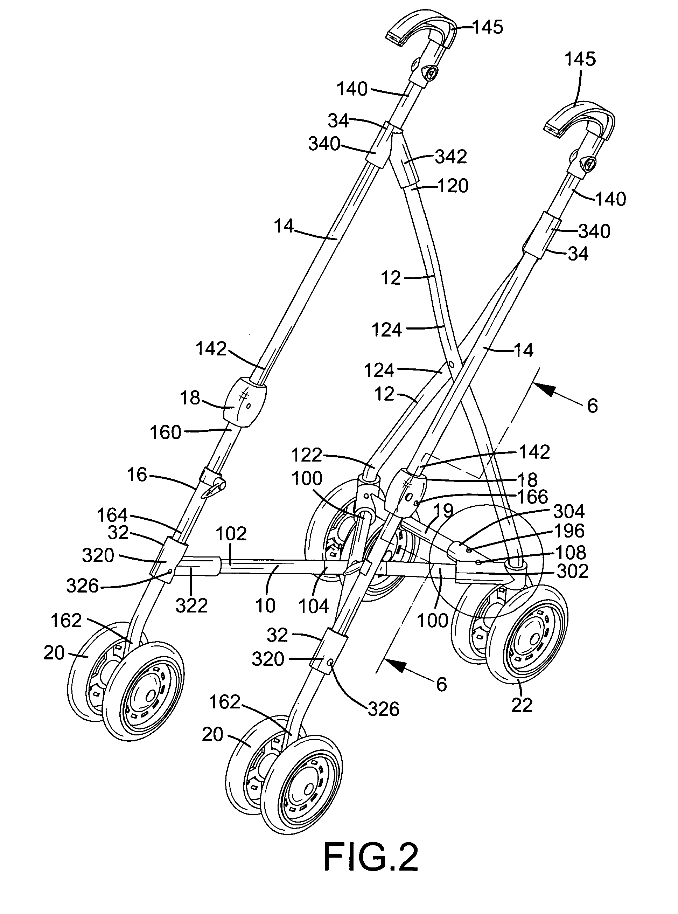

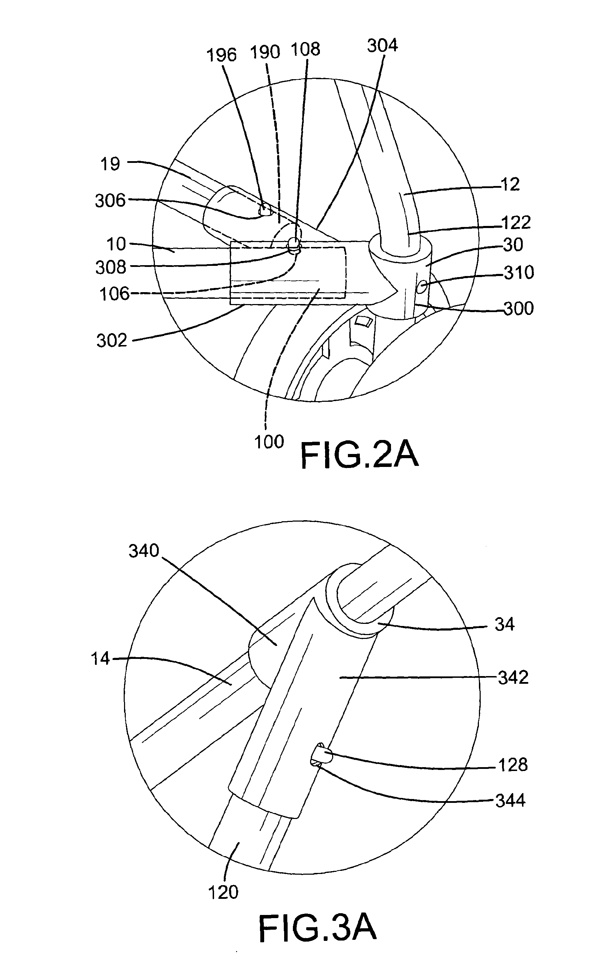

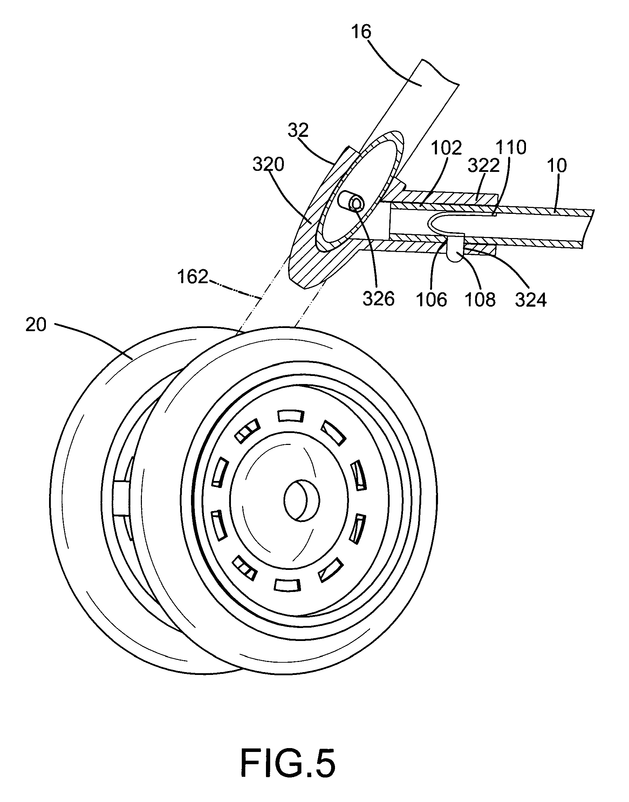

An assembly-type toy stroller according to the preferred teachings of the present invention is shown in the drawings and includes cross-hinged first and second bottom tubes 10. Specifically, each of first and second bottom tubes 10 includes first and second ends 100 and 102 and an intermediate portion 104 between first and second ends 100 and 102. Intermediate portion 104 of each of first and second bottom tubes 10 includes a groove. One of the grooves faces upward and the other groove faces downward when the toy stroller is in the extended state. According to the most preferred form shown, a middle of intermediate portion 104 of first bottom tube 10 is pivotably connected to a middle of intermediate portion 104 of second bottom tube 10. First and second ends 100 and 102 of first and second bottom tubes 10 are on the same plane. This allows reduction in an overall volume of the first and second bottom tubes 10. Each of first and second ends 100 and 102 of each of first and second bottom tubes 10 includes a radial hole 106 (FIGS. 2A and 5) and receives a resilient plate 110 having a first end fixed to an inner periphery of bottom tube 10. A positioning button 108 is fixed to a second end of each resilient plate 110 and biased by resilient plate 110 out of bottom tube 10 via radial hole 106.

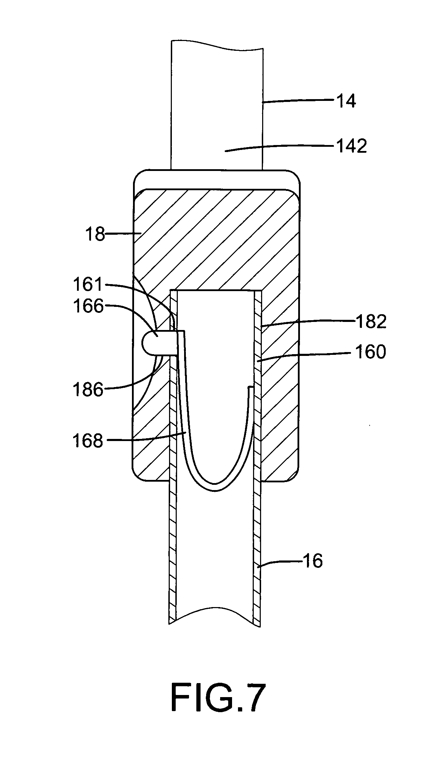

According to the preferred form shown, the toy stroller further includes first and second tubular front legs 16 each having an upper section 160, a lower section 162, and an intermediate section 164 between upper and lower sections 160 and 162. Upper section 160 of each front leg 16 includes a radial hole 161 (FIG. 7) and receives a resilient plate 168 having a first end fixed to an inner periphery of front leg 16. A positioning button 166 is fixed to a second end of each resilient plate 168 and biased by resilient plate 168 out of front leg 16 via radial hole 161. A front wheel unit 20 is coupled to lower section 162 of each front leg 16.

According to the preferred form shown, the toy stroller further includes first and second coupling members 32 each having a first tube 320 and a second tube 322 extending outward from an outer periphery of first tube 320. Each second tube 322 has a radial positioning hole 324. First tube 320 of first coupling member 32 is fixed around intermediate section 164 of first front leg 16 by a rivet 326. First tube 320 of second coupling member 32 is mounted around intermediate section 164 of second front leg 16 by a rivet 326. Second end 102 of first bottom tube 10 is received in second tube 322 of first coupling member 32 with radial hole 106 of second end 102 of first bottom tube 10 aligned with radial positioning hole 324 of first coupling member 32 and with positioning button 108 extending through radial positioning hole 324 and out of second tube 322 of first coupling member 32. Second end 102 of second bottom tube 10 is received in second tube 322 of second coupling member 32 with radial hole 106 of second end 102 of second bottom tube 10 aligned with radial positioning hole 324 of second coupling member 32 and with positioning button 108 extending through radial positioning hole 324 and out of second tube 322 of second coupling member 32. Thus, first and second bottom tubes 10 can not move along longitudinal axes of second tubes 322 of first and second coupling members 32.

According to the preferred form shown, the toy stroller further includes first and second handle tubes 14 each having an upper and 140 and a lower end 142. A handle 145 is fixed to upper end 140 of each of first and second handle tubes 14. A user can grip handles 145 and move the toy stroller.

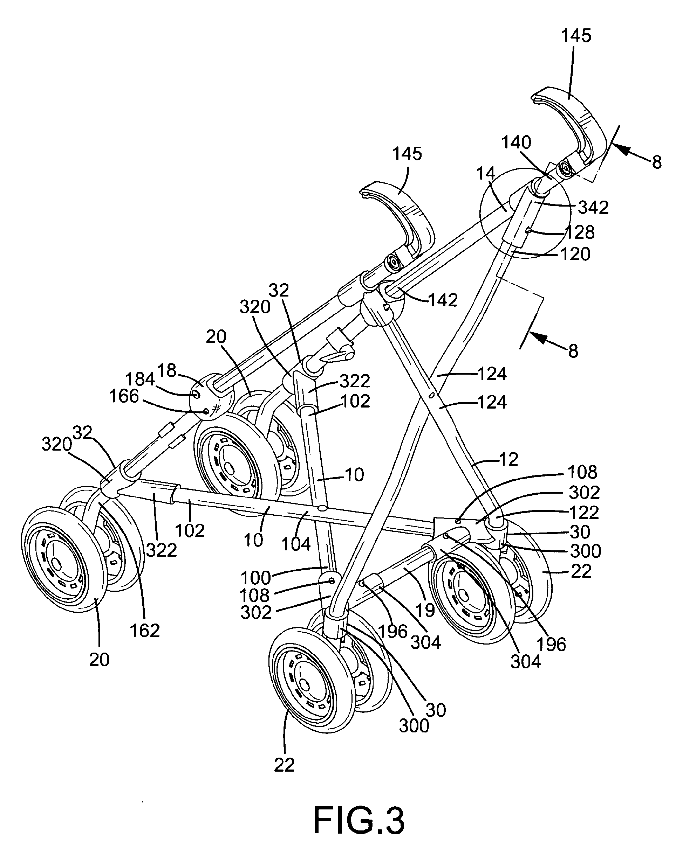

According to the preferred form shown, the toy stroller further includes first and second engaging members 34 each having a first tube 340 and a second tube 342 extending outward from an outer periphery of first tube 340 (FIG 3A). Second tube 342 of each of first and second engaging members 34 includes a radial positioning hole 344. First tube 340 of first engaging member 34 is fixed around upper end 140 of first handle tube 14 below one of handles 145 by a rivet 346. First tube 340 of second engaging member 34 is fixed around upper end 140 of second handle tube 14 below the other handle 145 by a rivet 346.

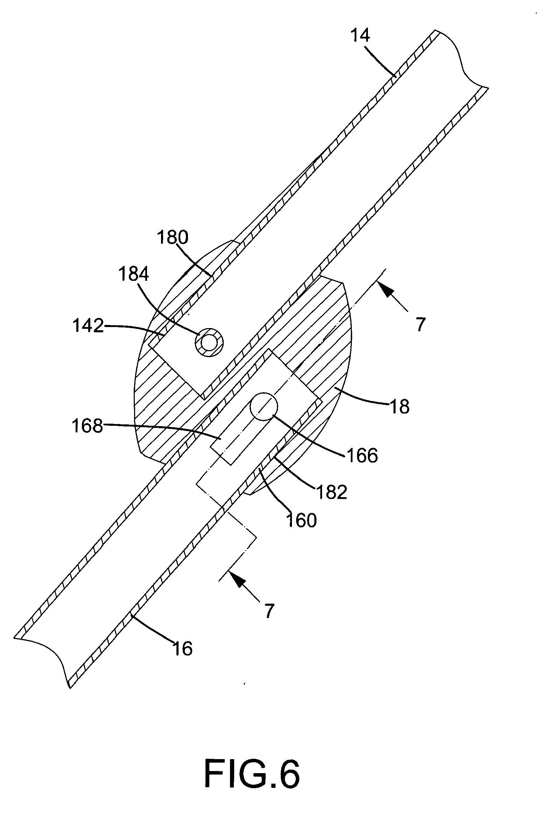

According to the preferred form shown, the toy stroller further includes first and second sleeves 18 each having a first receptacle 180 facing upward and a second receptacle 182 facing downward (FIG 6). Each of first and second sleeve 18 further includes a radial positioning hole 186 in communication with second receptacle 182. Lower end 142 of first handle tube 14 is fixed in first receptacle 180 of first sleeve 18 by a rivet 184. Lower end 142 of second handle tube 14 is received in first receptacle 180 of second sleeve 18 by a rivet 184. Upper section 160 of first front leg 16 is received in second receptacle 182 of first sleeve 18 with radial hole 161 of first front leg 16 aligned with radial positioning hole 186 of first sleeve 18 and with positioning button 166 of first front leg 16 extending through radial positioning hole 186 of first sleeve 18. Upper section 160 of second front leg 16 is received in second receptacle 182 of second sleeve 18 with radial hole 161 of second front leg 16 aligned with radial positioning hole 186 of second sleeve 18 and with positioning button 166 of second front leg 16 extending through radial positioning hole 186 of second sleeve 18. Thus, first and second front legs 16 can not move along longitudinal axes of second receptacles 182 of first and second sleeves 18. Furthermore, first handle tube 14 is coupled with first front leg 16 as a single unit, and second handle tube 14 is coupled with second front leg 16 as a single unit.

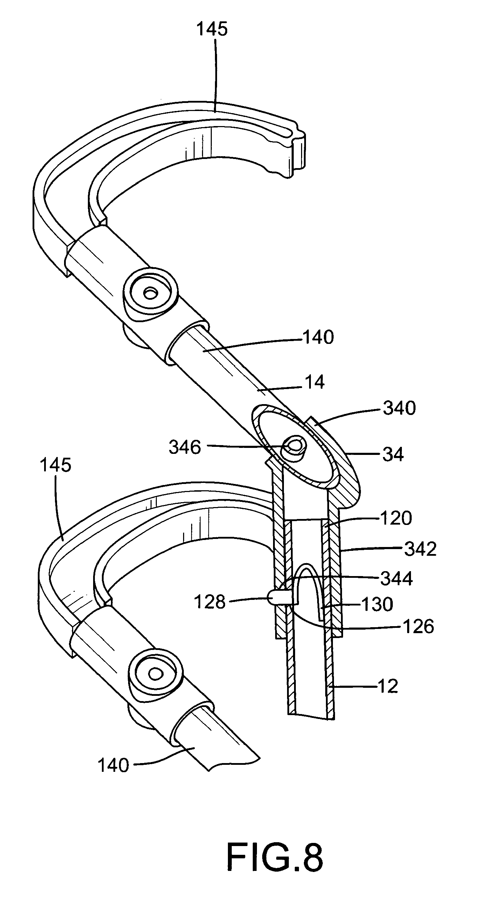

According to the preferred form shown, the toy stroller further includes cross-hinged first and second rear tubes 12. Each of first and second rear tubes 12 includes first and second ends 120 and an arcuate intermediate portion 124 between first and second ends 120 and 122. Intermediate portion 124 of each of first and second rear tubes 12 defines a groove. One of the grooves of the first and second rear tubes 12 faces forward and the other groove faces rearward when the toy stroller is in the extended state. According to the most preferred form shown, a middle of arcuate intermediate portion 124 of first rear tube 12 is pivotably connected to a middle of arcuate intermediate portion 124 of second rear tube 12. Furthermore, first and second ends 120 and 122 of first and second rear tubes 12 are on the same plane. This allows reduction in the overall volume of the first and second rear tubes 12. First end 120 of each of first and second rear tubes 12 includes a radial hole 126 (FIG 8) and receives a resilient plate 130 having a first end fixed to an inner periphery of rear tube 12. A positioning button 128 is fixed to a second end of each resilient plate 130 and biased by resilient plate 130 out of rear tube 12 via radial hole 126.

According to the preferred form shown, the toy stroller further includes first and second connecting members 30 each having a first tube 300, a second tube 302 extending outward from an outer periphery of first tube 300, and a third tube 304 extending outward from an outer periphery of second tube 302 (FIG 2A). Second tube 302 of each of first and second connecting members 30 includes a radial positioning hole 308. Third tube 304 of each of first and second connecting members 30 includes a radial positioning hole 306. Second end 122 of first rear tube 12 is extended through first tube 300 of first connecting member 30. Second end 122 of second rear tube 12 is extended through first tube 300 of second connecting member 30 A rear wheel unit 22 is pivotably connected to second end 122 of each of first and second rear tubes 12. First tube 300 of each of first and second connecting members 30 is fixed by a rivet 310 to second end 122 of one of first and second rear tubes 12.

First end 100 of first bottom tube 10 is received in second tube 302 of second connecting member 30 with radial hole 106 of first end 100 of first bottom tube 10 aligned with radial positioning hole 308 of second tube 302 of second connecting member 30 and with positioning button 108 of first end 100 of first bottom tube 10 extending through radial positioning hole 308 and out of second tube 302 of second connecting member 30. First end 100 of second bottom tube 10 is received in second tube 302 of first connecting member 30 with radial hole 106 of first end 100 of second bottom tube 10 aligned with radial positioning hole 308 of second tube 302 of first connecting member 30 and with positioning button 108 of first end 100 of second bottom tube 10 extending through radial positioning hole 308 and out of second tube 302 of first connecting member 30.

First end 120 of first rear tube 12 is received in second tube 342 of second engaging member 34 with radial hole 126 of first end 120 of first rear tube 12 aligned with radial positioning hole 344 of second tube 342 of second engaging member 34 and with positioning button 128 of first end 120 of first rear tube 12 extending through radial positioning hole 344 and out of second tube 342 of second engaging member 34 (FIGS. 3A and 8). First end 120 of second rear tube 12 is received in second tube 342 of first engaging member 34 with radial hole 126 of first end 120 of second rear tube 12 aligned with radial positioning hole 344 of second tube 342 of first engaging member 34 and with positioning button 128 of first end 120 of second rear tube 12 extending through radial positioning hole 344 and out of second tube 342 of first engaging member 34. Thus, first and second rear tubes 12 can not move along longitudinal axes of second tubes 342 of first and second engaging members 34.

Coupling members 32, connecting members 30, sleeves 18, and engaging members 34 according to the teachings of the present invention connect the parts of the toy stroller to form the toy stroller.

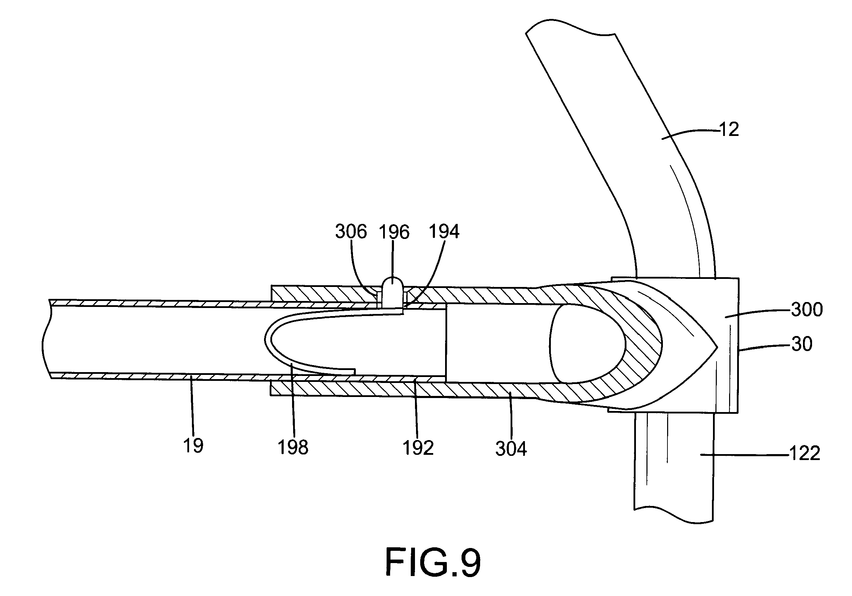

According to the preferred form shown, the toy stroller further includes a fixing tube 19 having left and right ends 190 and 192. Each of left and right ends 190 and 192 includes a radial hole 194 (FIG. 9) and receives a resilient plate 198 having a first end fixed to an inner periphery of fixing tube 19. A positioning button 196 is fixed to a second end of each resilient plate 196 and biased by resilient plate 198 out of fixing tube 19 via radial hole 194. Left end 190 of fixing tube 19 is received in third tube 304 of second connecting member 30 with radial hole 194 of left end 190 aligned with radial positioning hole 306 of third tube 304 of second connecting member 30 and with positioning button 196 of left end 190 extending through radial positioning hole 306 and out of third tube 304 of second connecting member 30. Right end 192 of fixing tube 19 is received in third tube 304 of first connecting member 30 with radial hole 194 of right end 190 aligned with radial positioning hole 306 of third tube 304 of first connecting member 30 and with positioning button 196 of right end 192 extending through radial positioning hole 306 and out of third tube 304 of first connecting member 30. Thus, fixing tube 19 is mounted between first and second bottom tubes 10 and first and second rear tubes 12 and prevents relative rotation between first and second bottom tubes 10 and first and second rear tubes 12.

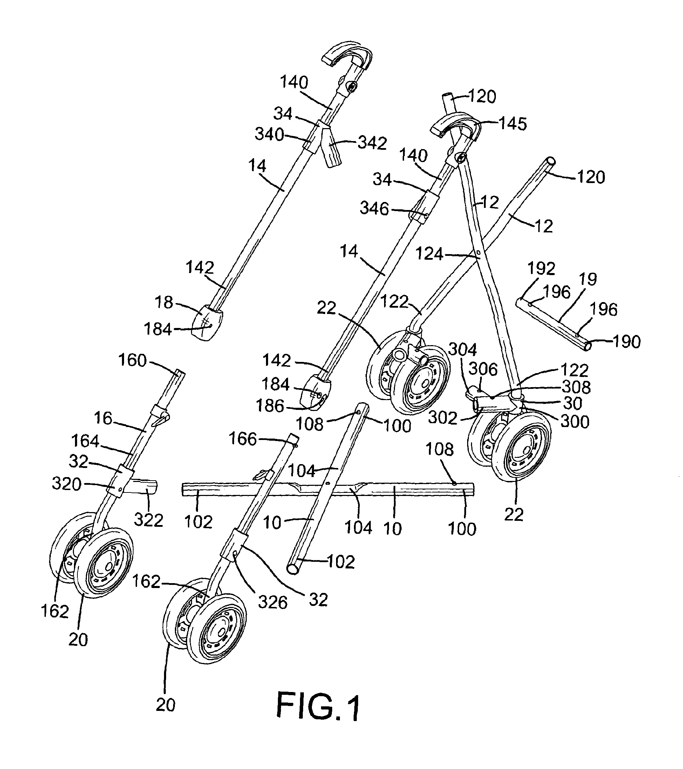

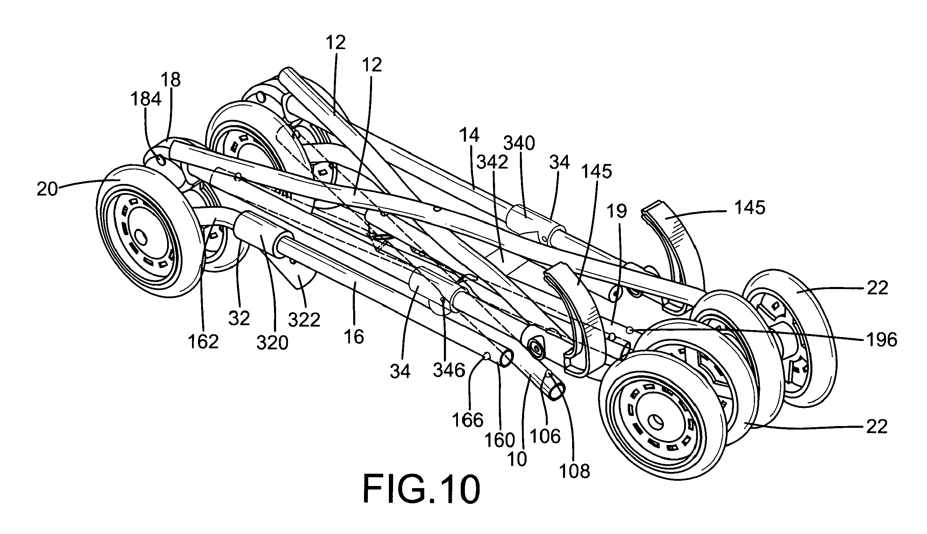

Positioning buttons 108 on first ends 100 of first and second bottom tubes 10 can be pressed to disengage from radial positioning holes 308 of second tubes 302 of first and second connecting members 30, allowing detachment of first and second bottom tubes 10 from first and second connecting members 30. Positioning buttons 108 on second ends 102 of first and second bottom tubes 10 can be pressed to disengage from positioning holes 324 of second tubes 322 of first and second coupling members 32, allowing detachment of first and second bottom tubes 10 from first and second coupling members 32. Positioning buttons 166 on upper sections 160 of first and second front legs 16 can be pressed to disengage from positioning holes 186 of first and second sleeves 18, allowing detachment of first and second front legs 16 from first and second sleeves 18. Positioning buttons 128 on first ends 120 of first and second rear tubes 12 can be pressed to disengage from positioning holes 344 of first and second engaging members 34, allowing detachment of first and second rear tubes 12 from first and second engaging members 34. Positioning buttons 196 on left and right ends 190 and 192 of fixing tube 19 can be pressed to disengage from positioning holes 306 of first and second connecting members 30, allowing detachment of fixing tube 19 from first and second connecting members 30. Thus, the toy stroller according to the preferred teachings of the present invention can be dismantled into several separate units (see FIG. 1) and can be stacked together. Specifically, the units of the toy stroller after dismantle occupy a relatively smaller volume (FIG. 10), which is convenient for storage. Furthermore, the costs for transport can be cut. The units of the toy stroller according to the preferred teachings of the present invention can be easily and quickly assembled and dismantled.

Thus since the invention disclosed herein may be embodied in other specific forms without departing from the spirit or general characteristics thereof, some of which forms have been indicated, the embodiments described herein are to be considered in all respects illustrative and not restrictive. The scope of the invention is to be indicated by the appended claims, rather than by the foregoing description, and all changes which come within the meaning and range of equivalency of the claims are intended to be embraced therein.

## Claims

1. A toy stroller comprising, in combination:
first and second bottom tubes (10) each including first and second ends (100, 102) and an intermediate portion (104) between the first and second ends (100, 102), with the first and second bottom tubes (10) being cross hinged at the intermediate portions (104);
first and second rear tubes (12) each including first and second ends (120, 122) and an intermediate portion (124) between the first and second ends (120, 122), with the first and second rear tubes (12) being cross hinged at the intermediate portions (124), with a rear wheel unit (22) coupled to the lower end (122) of each of the first and second rear tubes (12);
first and second connecting members (30) each including a first tube (300), a second tube (302) extending outward from an outer periphery of the first tube (300), and a third tube (304) extending outward from an outer periphery of the second tube (302), with the first tube (300) of the first connecting member (30) fixed to the second end (122) of the first rear tube (12), with the first tube (300) of the second connecting member (30) fixed to the second end (122) of the second rear tube (12), with the first end (100) of the first bottom tube (10) detachably mounted in the second tube (302) of the second connecting member (30), with the first end (100) of the second bottom tube (10) detachably coupled with the second tube (302) of the first connecting member (30);
first and second handle tubes (14) each including upper end lower ends (140, 142), with a handle (145) fixed to each of the first and second handle tubes (14);
first and second engaging members (34) each including a first tube (340) and a second tube (342) extending from an outer periphery of the first tube (340), with the first tube (340) of the first engaging member (34) fixed to the upper end (140) of the first handle tube (14), with the first tube (340) of the second engaging member (34) fixed to the upper end (140) of the second handle tube (14), with the first end (120) of the first rear tube (12) detachably coupled with the second tube (342) of the second engaging member (34), with the first end (120) of the second rear tube (12) detachably coupled with the second tube (342) of the first engaging member (34);
first and second sleeves (18) each including first and second receptacles (180, 182), with the lower end (142) of the first handle tube (14) fixed in the first receptacle (180) of the first sleeve (18), with the lower end (142) of the second handle tube (14) fixed in the first receptacle (180) of the second sleeve (18);
first and second front legs (16) each including an upper section (160), a lower section (162), and an intermediate section (164) between the upper and lower sections (160, 162), with a front wheel unit (20) coupled to the lower section (162) of each of the first and second front legs (16), with the upper section (160) of the first front leg (16) detachably mounted in the second receptacle (182) of the first sleeve (18), with the upper section (160) of the second front leg (16) detachably mounted in the second receptacle (182) of the second sleeve (18);
first and second coupling members (32) each including a first tube (320) and a second tube (322) extending outward from an outer periphery of the first tube (320), with the first tube (320) of the first coupling member (32) fixed around the intermediate section (164) of the first front leg (16), with the first tube (320) of the second coupling member (32) fixed around the intermediate section (164) of the second front leg (16), with the second end (102) of the first bottom tube (10) detachably coupled with the second tube (322) of the first coupling member (32), with the second end (102) of the second bottom tube (10) detachably coupled with the second tube (322) of the second coupling member (32); and
a fixing tube (19) including left and right ends (190, 192), with the left end (190) detachably coupled with the third tube (304) of the second connecting member (30), with the right end (192) detachably coupled with the third tube (304) of the first connecting member (30).

2. The toy stroller as claimed in claim 1, with the third tube (304) of each of the first and second connecting members (30) including a first radial positioning hole (306), with each of the left and right ends (190, 192) of the fixing tube (19) including a first radial hole (194) aligned with the first radial positioning hole (306) of the third tube (304) of one of the first and second connecting members (30), with a first resilient plate (198) being received in each of the left and right ends (190, 192) and including a first end fixed to an inner periphery of the fixing tube (19) and a second end, with a first positioning button (196) fixed to the second end of each of the first resilient plates (198) and biased by the first resilient plate (198) to extend through one of the first radial holes (194) and one of the first radial positioning holes (306), and with each of the first positioning buttons (196) being pressable to disengage from the first radial positioning hole (306) to allow detachment of the fixing tube (19) from the first and second connecting members (30).

3. The toy stroller as claimed in claim 2, with the second tube (302) of each of the first and second connecting tubes (30) including a second radial positioning hole (308), with each of the first and second ends (100, 102) of each of the first and second bottom tubes (10) including a second radial hole (106), with the second radial hole (106) of the first end (100) of each of the first and second bottom tubes (10) aligned with the second radial positioning hole (308) of the second tube (302) of one of the first and second connecting tubes (30), with a second resilient plate (110) being received in each of the first and second ends (100, 102) of each of the first and second bottom tubes (10) and including a first end fixed to an inner periphery of the bottom tube (10) and a second end, with a second positioning button (108) fixed to the second end of each of the second resilient plates (110), with the second positioning button (108) of the first end (100) of each of the first and second bottom tubes (10) biased by one of the second resilient plates (110) to extend through one of the second radial holes (106) and one of the second radial positioning holes (308), and with each of the second positioning buttons (108) of the first ends (100) of the first and second bottom tubes (10) being pressable to disengage from the second radial positioning hole (308) of the second tube (302) of one of the first and second connecting tubes (30) to allow detachment of the first ends (100) of the first and second bottom tubes (10) from the first and second connecting members (30).

4. The toy stroller as claimed in claim 3, with the second tube (322) of each of the first and second coupling members (32) including a third radial positioning hole (324), with the second positioning button (108) of the second end (102) of each of the first and second bottom tubes (10) biased by one of the second resilient plates (110) to extend through one of the second radial holes (106) and one of the third radial positioning holes (324), and with each of the second positioning buttons (108) of the second ends (102) of the first and second bottom tubes (10) being pressable to disengage from the third radial positioning hole (324) of the second tube (322) of one of the first and second coupling members (32) to allow detachment of the second ends (102) of the first and second bottom tubes (10) from the first and second coupling members (32).

5. The toy stroller as claimed in claim 4, with the second tube (342) of each of the first and second engaging members (34) including a fourth radial positioning hole (344), with the first end (120) of each of the first and second rear tubes (12) including a third radial hole (126), with a third resilient plate (130) being received in the first end (120) of each of the first and second rear tubes (12) and including a first end fixed to an inner periphery of the rear tube (12) and a second end, with a third positioning button (128) fixed to the second end of each of the third resilient plates (130) and biased by the third resilient plate (130) to extend through one of the third radial holes (126) and one of the fourth radial positioning holes (344), and with the third positioning buttons (128) being pressable to disengage from the fourth radial positioning holes (344) to allow detachment of the first ends (120) of the first and second rear tubes (12) from the first and second engaging members (34).

6. The toy stroller as claimed in claim 5, with each of the first and second sleeves (18) including a fifth radial positioning hole (186) in communication with the second receptacle (182), with the upper section (160) of each of the first and second front legs (16) including a fourth radial hole (161), with a fourth resilient plate (168) being received in the upper section (160) of each of the first and second front legs (16) and including a first end fixed to an inner periphery of the front leg (16) and a second end, with a fourth positioning button (166) fixed to the second end of each of the fourth resilient plates (168) and biased by the fourth resilient plate (168) to extend through one of the fourth radial holes (161) and one of the fifth radial positioning holes (186), and with the fourth positioning buttons (166) being pressable to disengage from the fifth radial positioning holes (186) to allow detachment of the upper sections (160) of the first and second front legs (16) from the first and second sleeves (18).
